# EUROPEAN PATENT APPLICATION

(11) **EP 3 343 747 A1**
(43) Date of publication of application: **04.07.2018**
(21) Application number: 18150104.0
(22) Date of filing: 02.01.2018
(51) Int. Cl.: H02M 7/25, H02P 9/48, H02M 1/00

(54) **ELECTRIC POWER GENERATING SYSTEM WITH A PERMANENT MAGNET GENERATOR**

(30) Priority: 03.01.2017 US 201715397354
(71) Applicant: Hamilton Sundstrand Corporation, Charlotte, NC 28217 (US)
(72) Inventor: ROZMAN, Gregory I., Rockford, IL 61114 (US); MOSS, Steven J., Rockford, IL 61114 (US); GIERAS, Jacek F., Glastonbury, CT 06033 (US)
(74) Representative: Dehns

(57) **Abstract**

An electric power generating system (EPGS) (100) may comprise a permanent magnet generator (PMG) (110) comprising a rotor (160) comprising a permanent magnet (132), and a stator (162) comprising a plurality of armature windings (102, 104) configured to output a plurality of three-phase voltages, and a plurality of rectifiers (112, 114, 116, 118) corresponding to the plurality of armature windings (102, 104) and configured to rectify the plurality of three-phase voltages, wherein the plurality of rectifiers (112, 114, 116, 118) are connected in series.

## Description

### FIELD

The disclosure generally relates to electrical power systems, and more particularly to the design of an electrical power generating system for a vehicle.

### BACKGROUND

Ground vehicles, included those suitable for off road use, have migrated toward hybrid electric technology using high voltage direct current (HVDC) distribution. A permanent magnet generator (PMG) may be used to generate electric power for an electronic power system. A PMG typically includes a stator winding and a rotor winding to generate a single three-phase voltage. The three-phase voltage may be outputted to a filter for conversion to a DC voltage.

### SUMMARY

In various embodiments, an electric power generating system (EPGS) is disclosed. An electric power generating system (EPGS) may comprise a permanent magnet generator (PMG) comprising a rotor comprising a permanent magnet, and a stator comprising a plurality of armature windings configured to output a plurality of three-phase voltages, and a plurality of rectifiers corresponding to the plurality of armature windings and configured to rectify the plurality of three-phase voltages, wherein the plurality of rectifiers are connected in series.

In various embodiments, the plurality of rectifiers may be configured to output a direct current (DC) voltage. The EPGS may further comprise an output filter configured to receive the DC voltage. The EPGS may further comprise a voltage regulator configured to control the plurality of rectifiers and a voltage sensor configured to be connected across a DC load, wherein the voltage regulator receives a sensor signal from the voltage sensor. The plurality of rectifiers may comprise at least one of a two-level six-switch bidirectional pulse width modulated (PWM) active rectifier and a three-level unidirectional "Vienna" active rectifier. A phase shift between each of the plurality of three-phase voltages comprises 360/n degrees, where n is a total number of armature windings. The plurality of rectifiers may comprise a transistor, the voltage regulator configured to control the transistor. The output filter may comprise at least a capacitor.

In various embodiments, an electric power generating system (EPGS) is disclosed. An EPGS may comprise a permanent magnet generator (PMG) comprising a rotor, a stator comprising, a first armature winding configured to output a first three-phase voltage, and a second armature winding configured to output a second three-phase voltage, a first active rectifier configured to rectify the first three-phase voltage received from the first armature winding, a second rectifier configured to rectify the second three-phase voltage received from the second armature winding, a first capacitor connected across the first active rectifier, and a second capacitor connected across the second rectifier, wherein the first capacitor and the second capacitor are connected in series.

In various embodiments, the first active rectifier may be configured to output a first direct current (DC) voltage and the second rectifier is configured to output a second DC voltage. The may further comprise an output filter connected across the first capacitor and the second capacitor. The output filter may receive a DC output voltage comprising a sum of at least the first DC voltage and the second DC voltage. The second rectifier may comprise an active rectifier. The EPGS may further comprise a voltage regulator in electronic communication with the output filter and in electronic communication with the first active rectifier, wherein the voltage regulator controls the first active rectifier. The EPGS may further comprise a voltage sensor electrically coupled across the output filter configured to send a sensor signal to the voltage regulator. The first active rectifier may comprise a transistor, the voltage regulator configured to control the transistor. The transistor may comprise at least one of an insulated gate field-effect transistor (IGFET), an insulated-gate bipolar transistor (IGBT), and a metal-oxide semiconductor field-effect transistor (MOSFET). The first active rectifier may comprise at least one of a two-level six-switch pulse width modulated (PWM) bidirectional active rectifier and a unidirectional three-level "Vienna" active rectifier.

In various embodiments, a method for generating electric power is disclosed, in accordance with various embodiments. A method for generating electric power may comprise rotating a rotor of a permanent magnet generator, generating, via a first stator armature winding, a first three-phase voltage in response to the rotating, generating, via a second stator armature winding, a second three-phase voltage in response to the rotating, outputting, by the permanent magnet generator, the first three-phase voltage, outputting, by the permanent magnet generator, the second three-phase voltage, rectifying, via a first rectifier, the first three-phase voltage into a first DC voltage, and rectifying, via a second rectifier, the second three-phase voltage into a second DC voltage.

In various embodiments, the method may further comprise controlling, by a voltage regulator, at least one of the first rectifier and the second rectifier to regulate at least one of the first DC voltage and the second DC voltage, sending, by a voltage sensor, a sensor signal to the voltage regulator, and receiving, by the voltage regulator, the sensor signal.

The foregoing features, elements, steps, or methods may be combined in various combinations without exclusivity, unless expressly indicated herein otherwise. These features, elements, steps, or methods as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a schematic view of an electric power generating system (EPGS) with active rectifiers comprising two-level, six-switch pulse width modulated (PWM) bidirectional converters, in accordance with various embodiments;
FIG. 2A illustrates a schematic view of an electric power generating system (EPGS), in accordance with various embodiments;
FIG. 2B illustrates a schematic view of an active Vienna rectifier architecture, in accordance with various embodiments;
FIG. 3 illustrates a schematic view of an electric power generating system (EPGS) with a combination of active rectifiers and passive rectifier, in accordance with various embodiments; and
FIGs. 4A and 4B illustrate a method for generating electric power, in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the inventions, it should be understood that other embodiments may be realized and that logical, chemical and mechanical changes may be made without departing from the spirit and scope of the inventions. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

As used herein, "electronic communication" means communication of electronic signals with physical coupling (e.g., "electrical communication" or "electrically coupled") or without physical coupling and via an electromagnetic field (e.g., "inductive communication" or "inductively coupled" or "inductive coupling"). In that regard, use of the term "electronic communication" includes both "electrical communication" and "inductive communication."

In various embodiments, PMGs of the present disclosure make use of multiple stator armature windings disposed in a single stator. Rectifiers are electrically coupled to the PMG for each respective stator armature winding. As a result, a plurality of outputs is connected in series to generate an HVDC signal. In this regard, PMGs of the present disclosure may result in improved packaging by reducing the size of diodes included in the rectifiers, due to the decreased voltage across each individual rectifier. PMGs of the present disclosure have significant reduction in weight of passive components, such as DC link capacitors. PMGs of the present disclosure may generate a DC output voltage having reduced DC bus voltage ripple with low DC bus capacitance. PMGs of the present disclosure may tend to minimize use of active power switches and associated control. PMGs of the present disclosure may enable redundancy, fault tolerance, use of low voltage power diodes and capacitors, and/or use of high temperature power diodes and DC link capacitors.

Unlike other synchronous generators, the output voltage of a PMG is directly proportional to the rotational velocity of the rotor. Therefore, active rectifiers may be configured to control an output voltage of the PMG to a desired value.

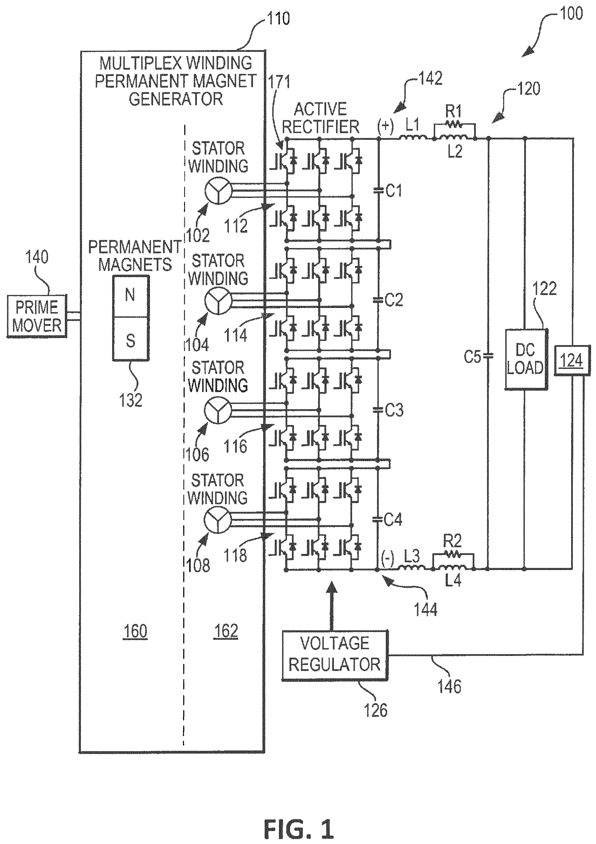

With reference to FIG. 1, a schematic view of an electric power generating system (EPGS) 100 is illustrated, in accordance with various embodiments. EPGS 100 may include a permanent magnet generator (PMG) 110 and an output filter 120. PMG 110 may include a rotor 160 and a stator 162. Rotor 160 may be driven by a prime mover 140. In various embodiments, prime mover 140 may comprise an engine, such as a diesel engine for example. But, prime mover 140 may comprise any mover suitable for rotating rotor 160. PMG 110 may generate electric power in response to rotation of rotor 160. This electric power may pass through output filter 120. Output filter 120 may be in electronic communication with PMG 110. In various embodiments, PMG 110 may comprise a multiplex winding PMG.

In various embodiments, rotor 160 may comprise permanent magnets 132. Permanent magnets 132 may comprise a north pole N and a south pole S. Stator 162 may include a plurality of three-phase stator armature windings. These stator armature windings may include a first armature winding 102, a second armature winding 104, a third armature winding 106, and a fourth armature winding 108. In various embodiments, during normal operation of PMG 110, rotor 160 is turned by an external device (e.g., prime mover 140) producing a rotating magnetic field, which induces a three-phase voltage within each of the stator windings. First armature winding 102 may be configured to output a first three-phase voltage in response to the rotation of rotor 160. Second armature winding 104 may be configured to output a second three-phase voltage in response to the rotation of rotor 160. Similarly, third armature winding 106 and fourth armature winding 108 may each be configured to output their own respective three-phase voltages.

The number of three-phase armature winding sets (i.e., first armature winding 102, second armature winding 104, etc.) may include any number n of stator armature windings, such as two or more armature windings. The phase shift between armature windings may be 360/n. Thus, in the illustrated embodiment of FIG. 1, the phase shift between armature windings is 360/4, or 90. This phase shift may be achieved by distribution of windings in slots of the stator. This feature enables reduction of the voltage ripple at the DC bus (i.e., across positive terminal 142 and negative terminal 144) and reduction of the size of DC output filter 120 as well as rectifier capacitors C1, C2, C3, and C4.

A first rectifier 112 may rectify the first three-phase voltage. Stated another way, the first rectifier 112 may convert the first three-phase voltage from a three-phase voltage to a direct current (DC) voltage. A second rectifier 114 may rectify the second three-phase voltage. Similarly, a third rectifier 116 and a fourth rectifier 118 may each rectify the respective third three-phase voltage and the fourth three-phase voltage. First rectifier 112 may comprise a two-level six-switch PWM bidirectional rectifier. First rectifier 112 may comprise a plurality of transistors and diodes, such as six transistors and six diodes for example. Said transistors may comprise insulated-gate bipolar transistors (IGBTs) and/or metal-oxide semiconductor field-effect transistors (MOSFETs). For example, first rectifier 112 may include transistor/diode pair 171. First rectifier 112, second rectifier 114, third rectifier 116, and fourth rectifier 118 may be located externally from the PMG 110. Therefore, PMG 110 may output a plurality of three-phase voltages, which may be rectified by the rectifiers.

EPGS 100 may include a plurality of active rectifiers, such as first rectifier 112, second rectifier 114, third rectifier 116, and/or fourth rectifier 118. The first rectifier 112 may output the first rectified voltage, now a first DC voltage, where it may be received by a DC load 122, via output filter 120. A first rectifier capacitor C1 may be connected across first rectifier 112. A second rectifier capacitor C2 may be connected across second rectifier 114. Similarly, a third rectifier capacitor C3 and a fourth rectifier capacitor C4 may be connected across third rectifier 116 and fourth rectifier 118, respectively. First rectifier capacitor C1, second rectifier capacitor C2, third rectifier capacitor C3, and fourth rectifier capacitor C4 may be connected in series. Stated another way, the plurality of rectifier capacitors, or first rectifier capacitor C1, second rectifier capacitor C2, third rectifier capacitor C3, and fourth rectifier capacitor C4 in the exemplary embodiment of FIG. 1, may be connected in series. In this regard, a DC output voltage comprising the sum of the voltages of the first DC voltage, the second DC voltage, the third DC voltage, and the fourth DC voltage is passed to output filter 120. It should be appreciated that the DC output voltage (i.e., the voltage across positive terminal 142 and negative terminal 144) equals the sum of the voltages across each of the rectifier filters C1, C2, C3, and C4. The voltage ratio, and thus the physical size, of the transistors in rectifiers 112, 114, 116, and 118 are reduced relative to the DC output voltage because said transistors only handle a portion of said voltage, and in this case approximately one fourth of said voltage. Similarly, the physical size of capacitors C1, C2, C3, and C4 are considerably reduced. Moreover, the size of the output filter 120 is considerably reduced because the voltage ripple is reduced.

Output filter 120 may comprise inductor L1, inductor L2, inductor, L3, inductor L4, resistor R1, resistor R2, and filter capacitor C5. Inductor L1 may be connected in series with positive terminal 142 and connected in series with resistor R1 and inductor L2. Resistor R1 and inductor L2 may be connected in parallel. Inductor L3 may be connected in series with negative terminal 144 and connected in series with resistor R2 and inductor L4. Resistor R2 and inductor L4 may be connected in parallel. Filter capacitor C5 may be connected in parallel with the load 122. Output filter 120 may improve the quality of the DC output voltage.

A load 122 may receive the filtered DC output voltage. In various embodiments, load 122 may comprise a high voltage load. For example, load 122 may receive a DC output voltage of six hundred volts (600 V).

A voltage sensor 124 may be connected across load 122. Voltage regulator 126 may receive sensor signal 146 from voltage sensor 124 and may regulate the voltage across load 122 via rectifiers 112, 114, 116, and/or 118. In this regard, voltage regulator 126 may control rectifiers 112, 114, 116, and/or 118. For example, voltage regulator 126 may control each transistor of rectifiers 112, 114, 116, and/or 118, such as transistor/diode pair 171 for example. The sensor signal 146 may comprise the voltage across load 122. In various embodiments, voltage regulator 126 may provide voltage references to the local controller of the active rectifiers (i.e., rectifiers 112, 114, 116, and/or 118) in response to the output load voltage to maintain output DC bus voltage at a specified level and to achieve voltage balance between active rectifiers. In this regard, rectifier 112 may be referred to herein as a first active rectifier.

In various embodiments, rectifiers 112, 114, 116, and/or 118 may comprise bidirectional active rectifiers, which may allow engine start from a vehicle battery or other external or internal power sources. Rectifiers 112, 114, 116, and/or 118 may comprise two-level six-switch pulse width modulated (PWM) bidirectional active rectifiers. Rectifiers 112, 114, 116, and/or 118 may comprise unidirectional three-level Vienna active rectifier.

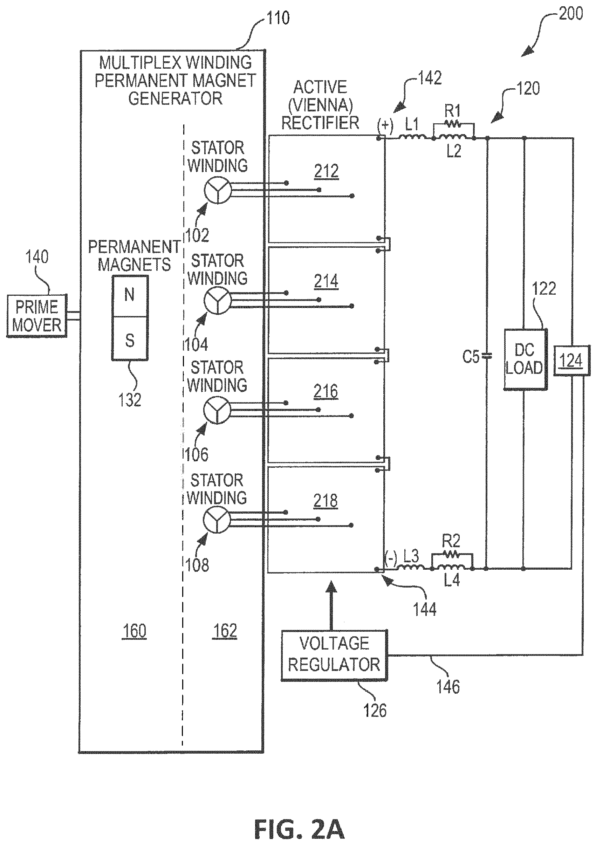

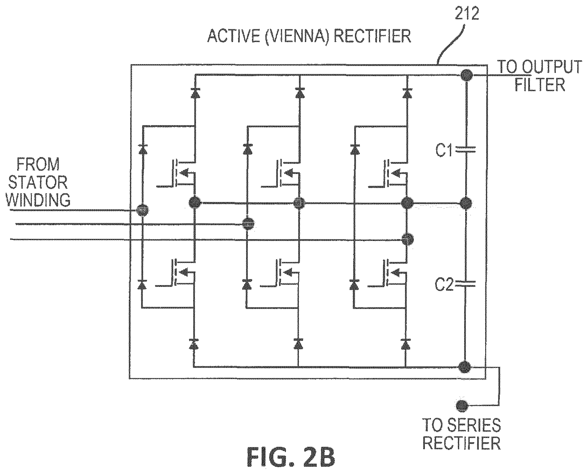

With reference to FIG. 2A, a schematic view of EPGS 200 is illustrated, in accordance with various embodiments. EPGS 200 may be similar to EPGS 100, with momentary reference to FIG. 1, except that the rectifiers of EPGS 200 may be different from the rectifiers of EPGS 100. In this regard, EPGS 200 may include rectifiers 212, 214, 216, and 218. The details of rectifiers 212, 214, 216, and 218 are illustrated in FIG. 2B, represented by rectifier 212. With additional reference to FIG. 2B, rectifier 212 may comprise an active Vienna rectifier. Rectifier 212 may comprise one or more insulated gate field-effect transistors (IGFETs).

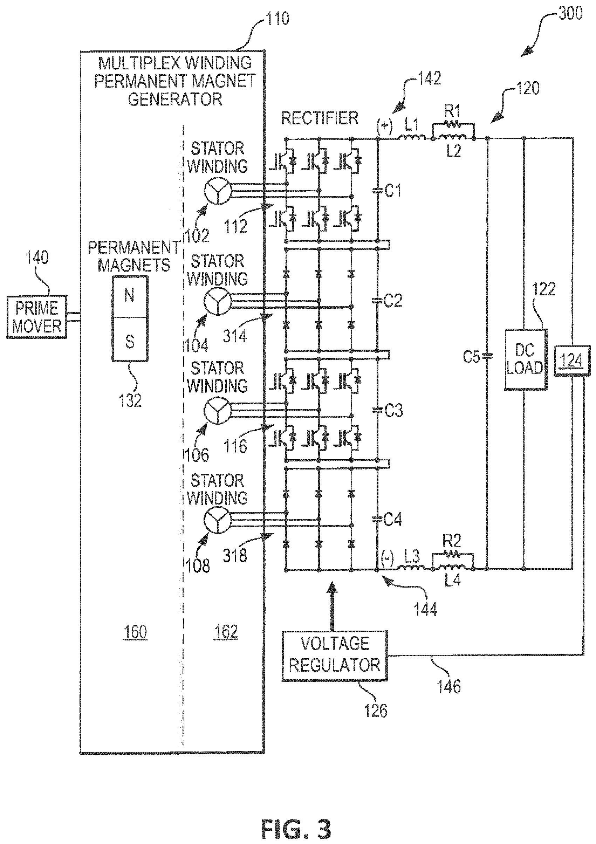

Although FIG. 1, FIG. 2A, and FIG. 2B illustrate EPGSs with active rectifiers, it is contemplated herein that EPGS 100 and/or EPGS 200 may include a combination of active and passive rectifiers. For example, with reference to FIG. 3, EPGS 300 includes active rectifier 112 and active rectifier 116, and passive rectifier 314 and passive rectifier 318. Active and passive rectifiers may be combined in any order and with any number of active and passive rectifiers. Active and passive rectifiers may be selected depending on the speed variation of prime mover 140.

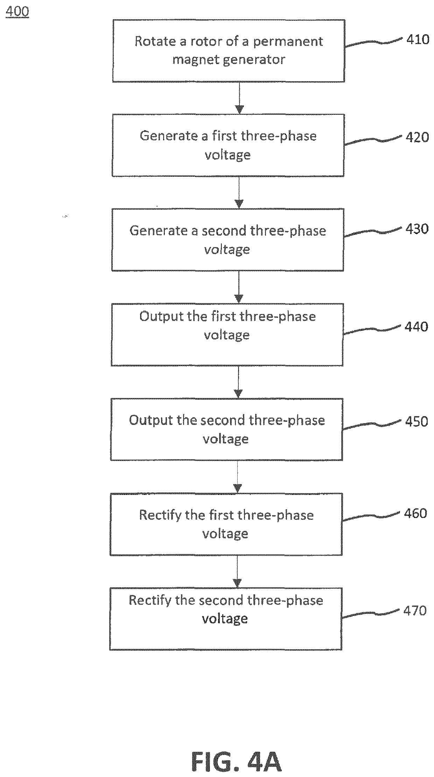

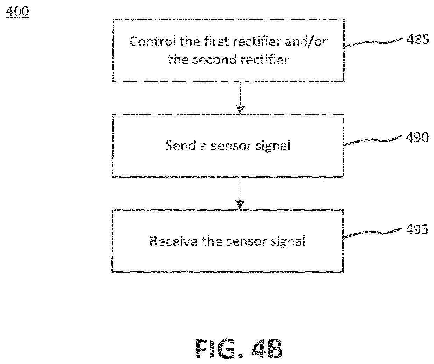

With combined reference to FIG. 4 and FIG. 5, a method 400 for generating electric power is illustrated, in accordance with various embodiments. Method 400 includes rotating a rotor of a permanent magnet generator (step 410). Method 400 includes generating a first three-phase voltage (step 420). Method 400 includes generating a second three-phase voltage (step 430). Method 400 includes outputting the first three-phase voltage (step 440). Method 400 includes outputting the second three-phase voltage (step 450). Method 400 includes rectifying the first three-phase voltage (step 460). Method 400 includes rectifying the second three-phase voltage (step 470). Method 400 may further include controlling at least one of the first rectifier and the second rectifier (step 485). Method 400 may further include sending a sensor signal (step 490). Method 400 may further include receiving the sensor signal (step 495).

With combined reference to FIG. 1 and FIG. 4A, step 410 may include rotating rotor 160 of PMG 110. Step 420 may include generating, via first armature winding 102, a first three-phase voltage in response to the rotation. Step 430 may include generating, via second armature winding 104, a second three-phase voltage in response to the rotation. Step 440 may include outputting, by PMG 110, the first three-phase voltage. Step 450 may include outputting, by PMG 110, the second three-phase voltage. Step 460 may include rectifying, via first rectifier 112, the first three-phase voltage into a first DC voltage. Step 470 may include rectifying, via second rectifier 114, the second three-phase voltage into a second DC voltage.

With combined reference to FIG. 1 and FIG. 4B, step 485 may include controlling, by voltage regulator 126, at least one of the first rectifier 112 and the second rectifier 114 to regulate at least one of the first DC voltage and the second DC voltage. Step 490 may include sending, by voltage sensor 124, sensor signal 146 to the voltage regulator 126. Step 495 may include receiving, by voltage regulator 126, the sensor signal 146.

Benefits, other advantages, and solutions to problems have been described herein with regard to specific embodiments. Furthermore, the connecting lines shown in the various figures contained herein are intended to represent various functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An electric power generating system (EPGS) (100), comprising:
a permanent magnet generator (PMG) (110) comprising:
a rotor (160) comprising a permanent magnet (132); and
a stator (162) comprising a plurality of armature windings (102, 104) configured to output a plurality of three-phase voltages; and
a plurality of rectifiers (112, 114, 116, 118) corresponding to the plurality of armature windings (102, 104) and configured to rectify the plurality of three-phase voltages,
wherein the plurality of rectifiers (112, 114, 116, 118) are connected in series.

2. The EPGS of claim 1, wherein the plurality of rectifiers (112, 114, 116, 118) are configured to output a direct current (DC) voltage.

3. The EPGS of claim 2, further comprising an output filter configured to receive the DC voltage.

4. The EPGS of claim 3, further comprising:
a voltage regulator (126) configured to control the plurality of rectifiers; and
a voltage sensor (124) configured to be connected across a DC load,
wherein the voltage regulator (126) receives a sensor signal from the voltage sensor (124).

5. The EPGS of claim 4, wherein the plurality of rectifiers (112, 114, 116, 118) comprise at least one of a two-level six-switch bidirectional pulse width modulated (PWM) active rectifier and a three-level unidirectional "Vienna" active rectifier, or
wherein a phase shift between each of the plurality of three-phase voltages comprises 360/n degrees, where n is a total number of armature windings (102, 104), or
wherein the plurality of rectifiers (112, 114, 116, 118) comprises a transistor, the voltage regulator configured to control the transistor.

6. The EPGS of claim 3, wherein the output filter comprises at least a capacitor.

7. An electric power generating system (EPGS) (100) comprising,
a permanent magnet generator (PMG) (110) comprising:
a rotor (160);
a stator (162) comprising:
a first armature winding (102) configured to output a first three-phase voltage; and
a second armature winding (104) configured to output a second three-phase voltage;
a first active rectifier (112) configured to rectify the first three-phase voltage received from the first armature winding (102);
a second rectifier (114) configured to rectify the second three-phase voltage received from the second armature winding (104);
a first capacitor C1 connected across the first active rectifier (112); and
a second capacitor C2 connected across the second rectifier(114),
wherein the first capacitor C1 and the second capacitor C2 are connected in series.

8. The EPGS of claim 7, wherein the first active rectifier (112) is configured to output a first direct current (DC) voltage and the second rectifier (114) is configured to output a second DC voltage, and
further comprising an output filter connected across the first capacitor C1 and the second capacitor C2.

9. The EPGS of claim 8, wherein the output filter receives a DC output voltage comprising a sum of at least the first DC voltage and the second DC voltage.

10. The EPGS of claim 9, wherein the second rectifier (114) comprises an active rectifier.

11. The EPGS of claim 9, further comprising a voltage regulator in electronic communication with the output filter (120) and in electronic communication with the first active rectifier, wherein the voltage regulator controls the first active rectifier.

12. The EPGS of claim 11, further comprising a voltage sensor electrically coupled across the output filter (120) configured to send a sensor signal to the voltage regulator.

13. The EPGS of claim 12, wherein the first active rectifier comprises a transistor, the voltage regulator configured to control the transistor, and optionally
wherein the transistor comprises at least one of an insulated gate field-effect transistor (IGFET), an insulated-gate bipolar transistor (IGBT), and a metal-oxide semiconductor field-effect transistor (MOSFET), or
wherein the first active rectifier comprises at least one of a two-level six-switch pulse width modulated (PWM) bidirectional active rectifier and a unidirectional three-level "Vienna" active rectifier.

14. A method for generating electric power comprising:
rotating a rotor (160) of a permanent magnet generator (110);
generating, via a first stator armature winding (102), a first three-phase voltage in response to the rotating;
generating, via a second stator armature winding (104), a second three-phase voltage in response to the rotating;
outputting, by the permanent magnet generator (110), the first three-phase voltage;
outputting, by the permanent magnet generator (110), the second three-phase voltage;
rectifying, via a first rectifier (112), the first three-phase voltage into a first DC voltage; and
rectifying, via a second rectifier (114), the second three-phase voltage into a second DC voltage.

15. The method of claim 14, further comprising:
controlling, by a voltage regulator, at least one of the first rectifier (112) and the second rectifier (114) to regulate at least one of the first DC voltage and the second DC voltage;
sending, by a voltage sensor (124), a sensor signal to the voltage regulator (126); and
receiving, by the voltage regulator (126), the sensor signal.
